# EUROPEAN PATENT SPECIFICATION

(11) **EP 1 228 639 B1**
(45) Date of publication and mention of the grant of the patent: **23.08.2006**
(21) Application number: 00941095.2
(22) Date of filing: 23.06.2000
(51) Int. Cl.: H04N 5/92

(54) **METHOD FOR RECORDING, REPRODUCING OR PROJECTING DIGITAL OR ANALOGUE, SAMPLED OR CONTINUOUS AUDIO AND/OR VIDEO RECORDS**
VERFAHREN ZUM AUFNEHMEN, WIEDERGEBEN ODER DARSTELLEN VON DIGITALEN ODER ANALOGEN, BEMUSTERTEN ODER UNUNTERBROCHENEN AUDIO- UND/ODER VIDEO-AFNAHMEN
PROCEDE D'ENREGISTREMENT, DE REPRODUCTION OU DE PROJECTION D'ENREGISTREMENTS AUDIO ET/OU VIDEO NUMERIQUES OU ANALOGIQUES, ECHANTILLONNEES OU CONNECTES

(30) Priority: 17.08.1999 SK 111999
(43) Date of publication of application: 07.08.2002
(73) Proprietor: Kellyér, Juraj, 831 03 Bratislava (SK)
(72) Inventor: Kellyér, Juraj, 831 03 Bratislava (SK)
(74) Representative: Jeck, Anton
(86) International application number: PCT/SK2000/000010
(87) International publication number: WO 2001/013631

(56) References cited:
- EP-A- 0 602 943
- US-A- 5 812 736

## Description

### Field of the Invention

The invention relates to recording, reproducing, or projecting digital or analogue, sampled or connected audio and/or video recordings and is characterised by the unique matching of sound with image recordings or of at least two sound or two image records respectively. The invention can be utilised in filmmaking, security, commercial, professional and closed circuit television technology and, primarily, in video technology. Thus, the invention generally relates to recording and reproduction or projection audio and video technology.

### Prior Art

At present, analogue VCRs are used on a limited scale in special security or monitoring systems to record image and sound information on continual medium. This automatically matches an image sample with the respective sound sample.

Sampled recording by analogue VCRs only records image information. Recording sound associated with sampled images remains unresolved. Therefore, sound is either not recorded at all or is recorded separately and as such does not lend itself to synchronisation with respective image recordings. Digital VCRs are successfully used in professional filmmaking technology as well as in security and other control systems. Digital VCRs record image information only in the connected continuous recording mode together with sound. Sound and image information is typically recorded on the same recording medium such as HDD (hard disk). Image and sound are synchronised, which is mostly related to the start of recording. However, in the sampling recording mode digital video recorders do riot enable to match continuously recorded sound to respective images.

Lastly, in conventional filmmaking technology image and sound are only acoustically synchronised at the beginning using slapstick.

A method described in EP-A-0 602 943 interleaves audio and video data packets such that a video packet and an audio packet comprise a packet header which includes a time code corresponding to the time at which the pack was recorded, the time code representing real time (hours, minutes, seconds etc.) in one implementation.

Another conventional synchronising method known from US-A-5 812 736 provides for relative timing, i.e. the audio track is recorded continuously from starting time (defined zero) and the times of image snapshots are stored in relation to the start on the time line in order to be able to play back the images and sound in proper correlation.

As no method is currently available for applying sound to a separate image recording and as some recording systems are yet to resolve synchronisation of sound and image or of at least two image and two sound recordings respectively, the need has arisen to deal with the problem, ultimately leading to the present invention.

### Substance of the Invention:

The invention concerns a method according to Claim 1.

Another significant feature of an alternative embodiment of the method in accordance with the invention is the option of functional independence of synchronised audio and video recordings. This feature can primarily be utilised when the durations of playback or projection of sound and image recordings differ, including a playback or projection failure.

Lastly, another significant feature of the method in accordance with the invention is the assignment of an identification code to dependent or independent matched audio and video recordings.

The benefits of the method for the playback or projection of digital or analogue sampled or connected audio and/or video recordings consist in the unique matching of image samples and selected sound samples or of at least two image or sound samples respectively. Real time is the moment of a given recording, which is unique and uniquely associated with a given moment and recorded as such during the recording of the audio and video signal. The notion of 'real time' implies a moment of time complcte with information about the year, month, hour, minute, second and fractions thereof. Real time is not an information value but a control element (a signal). The method in accordance with the invention solves in a fairly simple fashion the problem of image and sound synchronisation by controlling playback and projection by means of real time rather than by the start of the recording as in conventional systems. For the purposes of this invention: The notion of recording as an activity implies the recording (REC) of image and sound to any recording medium such as magnetic tape and disk, optical disk, hard disk, film tape or a semiconductor chip or other recording media; the notion of 'recording' as an object implies the outcome of recording, i.e. the recording medium already storing image and/or sound information; the notion of reproduction as an activity implies the playing back of recorded image or sound information after it was recorded or the subsequent processing of such information. In sound technology, for example, this relates to the playback of a recorded acoustic signal using reproduction equipment. The same applies to image technology (with the exception of conventional film technology). With regard to conventional film technology, where the recording medium for image and sound information is represented by conventional film tape, with film tape recording image and a separate magnetic tape recording sound, the relevant notion is called 'projection' and is used for the playback of image signals using specialised reproduction equipment (a film projector). The benefit of the method in accordance with the invention is its simple implementation in digital systems by means or software. In analogue video and television systems, the method can be implemented either entirely or in part by software as well as hardware. In conventional filmmaking technology, the method can only be implemented by means of hardware that inserts time markings in between images, for example in the form of bar codes, or by using part of the track to record a time value. The method can be beneficially used in sampled recordings, particularly in security systems; however, it can certainly be applied to connected audio and video recordings. Another major advantage consists in easy sound and image synchronisation when a part of data from either the audio or video recording is missing or lost, enabling to continue viewing images. If, for example, the capacity of a recording medium such as one used to record sound is exhausted and the operator does not insert another medium until after a delay, the proposed solution will not require a special start but images will be launched during playback (reproduction) when the sound time mark matches the time mark of the respective image etc. Under the proposed method, images from another recording with a different real time feature will not be launched during playback, as the respective day and time are unique and non-recurrent. The only condition is the matching of the system (real) time of the audio and video systems during recording. As image and sound synchronisation is secured by real time, a selected audio signal can be associated with one or several video recordings, even those that are locally independent. The advantage of the method consists in its versatility as it can be primarily applied in video systems that separately record sound and image. The method, however, can also be used in Himmaking technology (i.e. applied to conventional film) and television technology. An advantage useful in special applications, for exaniple in systems comprising several cameras and several microphones, is the assignment of an identincation code to audio and video channel recordings (signals) where an audio recording is matched to the respective pair of video recordings so as to make the playback of several recordings transparent and unequivocal. The method also enables intermittent image recording while sound is recorded continuously. It is maintained that the method in accordance with the invention enables to synchronise an unlimited number of audio and video recordings, including those made at different locations commencing at a different moment in time that is associated with a particular event, i.e. the launching of the recording is not time-dependent and is synchronised during playback as the real time of the recordings match. The recording of any event can be interrupted (for example during scenes not deemed to deserve recording) and restarted later. During playback, the recording will be started again in a synchronised mode as the recorded real time markings are matched.

The method in accordance with the invention can also be used as a monitoring system in government and privae businesses.

### Embodiments of the Invention

### Embodiment 1

This example describes the recording and playback of a single digital sampled audio and video recording by a digital video recorder with a single CCD camera, microphone and monitor. This mode is particularly useful for security or control systems. Image records are sampled at a rate of one image a minute, with the image record capturing real time information. Sound is recorded in a connected continuous fashion, also capturing real time information. To reproduce image and sound, i.e. to play back the recording, e.g. in order to examine it, the real time of the audio recording selected by the operator serves as the synchronisation signal. Supposing the operator chooses the real time interval from 1999-07-10 18:32:24 to 1999-07-10 18:50:00; then for a selected real time moment during the playback of the required connected sound recording the monitor will gradually display a sequence of 18 images of the monitored space from the selected time interval and associated with replayed sound.

### Embodiment 2

This example describes another mode of recording and playback of a sampled audio and video recording made using a digital recording system with a single CCD or CMOS camera featuring a motion detection function and a microphone. This mode is particularly appropriate in security and surveillance systems. Sound is recorded in a connected (continuous) fashion, as it does not require excessive recording medium capacity. Image is sampled every tenth second or continuously on detecting motion. In this instance, the real time of the audio recording serves as the synchronisation element during playback. In other words, while replaying a time interval, the operator listens to sounds in the surveyed area (such as a conversation between two and more people who remain static). On making a motion, the persons automatically activate the motion detection function and the system continuously records the image, enabling the operator to view an image (moving persons) while continuing to monitor sounds. After the persons become static, the system reverts to sampling at a rate of one image every (en seconds, while the sound continues to be recorded uninterrupted.

### Embodiment 3

This example is derived from Embodiment 2, however, the motion detection function can be reptaced by the system operator switching on continuous recording, image being sampled every two seconds and sound recorded in a connected fashion. For example, if a security officer responsible for a secured area views on screen and listens to what goes on in the secured area, the officer has the option of activating continuous image recording to capture in detail the action in a given time interval. During playback, sound is reproduced continuously and image is sampled. Starting at the moment when the officer activated continuous image recording, image is also displayed continuously after which it is sampled again. Sound invariably remains continuous. The advantage is that images, be it sampled or continuously recorded, are synchronised with sound during playback, as an image/images is/are displayed at the moments when recorded real time of image matches the recorded real time of sound.

### Embodiment 4

This example describes an alternative way of recording and playing back several digital locally dependent connected audio and video recordings. In particular, this mode can be used in the film industry, during filmmaking and to create film effects. For example, a unique non-recurring scene is being filmed by four cameras from four angles, recording image and sound and capturing real time. During editing at a later stage, the real time of audio and/or video recordings serves as the synchronising element, enabling the selection of image and its association with, for example, non-matching sound with identical real time, for example when an image is selected with a clifferent angle of image or sound recording.

### Embodiment 5

This example describes an alternative way of recording and playing back several locally independent digital audio and video recordings. This version is derived from Embodiment 1. Here, the security system has been enhanced, for example by a set of 10 cameras. Sound is recorded by an independent system with six armed microphones built into the monitored nodes of the secured facility. Thus, these systems and their audio and video recordings are functionally independent. Monitoring or examining audio and video recordings enables to survey, by choosing the respective real time of recording; the secured nodes of the facility. A local sound signal with a selected real time can be associated with an image or several images with the same real time but recorded at different locations; it is possible to switch between these images, as all recordings can be played back in a synchronised fashion synchronised using their real time.

### Embodiment 6

This example describes a way of recording and playing back several independent sampled analogue audio and video recordings in closed circuit television systems. In substance, the method is derived from one in Embodiment 5 and adjusted to suit the needs of closed circuit television transmission. Furthermore, the method enables to match audio and video recordings designated using identification codes. The apparent benefit is that the method in accordance with the invention can be implemented in existing closed circuit television networks by means of simple software or hardware modifications.

### Embodiment 7

This example describes a way of recording and projecting analogous connected audio and video recordings in conventional filmmaking technology, where image and sound are optically recorded on conventional film tape. Here, the method in accordance with the invention can be applied, for example by recording, such as by means of bar code or other means, real time information onto film tape in between images or onto the marginal segments of the recording medium, enabling unique matching of image and sound (if recorded separately) or of several image signals.

### Industrial Applications

The method of recording, playing back or projecting digital or analogue sampled or connected audio and/or video recordings in accordance with the present invention can be generally applied in every recording and reproduction audio and video system and projection technology.

## Claims

1. A method of reproduction or playback of digital or analogue, continuous or sampled, audio and/or video recordings, with synchronisation of at least one: audio and video or audio and audio or video and video recording **characterised by** the fact that audio and/or video recordings to be synchronised are locally independent from each other and that each recording comprises real time data, comprising year, month, day, hour, minute and second, where the real time of recording serves as the synchronising element for the recordings during their reproduction; wherein the value of the data specifying real time is equal to the value of the date and the time of the instant when such piece of data specifying real time was added or inserted to the recording during the process of recording, and by the fact that the synchronisation is achieved automatically.

2. Method in accordance with Claim 1 **characterised by** the fact that audio and/or video recordings to be synchronised are functionally independent from each other.

3. Method in accordance with Claim 1 **characterised by** the fact that dependent or independent matched audio and/or video recordings are assigned an identification code.

## Patentansprüche

1. Verfahren zur Reproduktion oder Wiedergabe von digitalen oder analogen, stetigen oder abgetasteten Audio- und/oder Videoaufzeichnungen mit Synchronisation mindestens einer der folgenden Aufzeichnungen: Audio und Video bzw. Audio und Audio bzw. Video und Video,
**dadurch gekennzeichnet,**
**dass** die zu synchronisierenden Audio- und/oder Videoaufzeichnungen örtlich unabhängig voneinander sind und dass jede Aufzeichnung Realzeitdaten umfasst, die Jahr, Monat, Tag, Stunde, Minute und Sekunde darstellen, wobei die Realzeit der Aufzeichnung als Synchronisationselement für die Aufzeichnungen während der Reproduktion dieser Aufzeichnungen dienen und der Wert der die Realzeit darstellenden Daten gleich dem Wert der Daten und der Zeit des Augenblicks ist, in dem ein solches die Realzeit darstellendes Datenstück der Aufzeichnung während des Aufzeichnungsvorgangs zugefügt bzw. in diese eingefügt wurde, und dass die Synchronisation automatisch erfolgt.

2. Verfahren nach Anspruch 1,
**dadurch gekennzeichnet,**
**dass** die zu synchronisierenden Audio- und/oder Videoaufzeichnungen funktionell unabhängig voneinander sind.

3. Verfahren nach Anspruch 1,
**dadurch gekennzeichnet,**
**dass** den abhängig oder unabhängig angepassten Audio- und/oder Videoaufzeichnungen ein ldentifikationskode zugeordnet ist.

## Revendications

1. Procédé de reproduction de lecture, d'enregistrement numérique ou analogique, continu ou par échantillon audio et/ou vidéo, avec synchronisation d'au moins un enregistrement audio et vidéo, ou audio et audio , ou vidéo et vidéo, **caractérisé par le fait que** des enregistrements audio et/ou vidéo à synchroniser sont indépendants localement l'un de l'autre et en ce que chaque enregistrement comprend des données en temps réel comprenant l'année, le mois, le jour, l'heure, la minute et la seconde, le temps réel d'enregistrement servant d'élément de synchronisation pour les enregistrements pendant leur reproduction, la valeur des données précisant le temps réel étant égale à la valeur de la date et du temps de l'instant où cette donnée précisant le temps réel a été ajoutée ou insérée à l'enregistrement pendant l'opération d'enregistrement et **par le fait que** la synchronisation est effectuée automatiquement.

2. Procédé suivant la revendication 1, **caractérisé par le fait que** des enregistrements audio et/ou vidéo à synchroniser sont indépendants fonctionnellement l'un de l'autre.

3. Procédé suivant la revendication 1, **caractérisé par le fait que** des enregistrements audio et/ou vidéo accordés, dépendants ou indépendants sont affectés d'un code d'identification.
